# EUROPÄISCHE PATENTSCHRIFT

(11) **EP 0 720 570 B1**
(45) Veröffentlichungstag und Bekanntmachung des Hinweises auf die Patenterteilung: **12.02.1997**
(21) Anmeldenummer: 94925348.8
(22) Anmeldetag: 03.09.1994
(51) Int. Cl.: B65D 63/16, F16L 33/12

(54) **VORRICHTUNG ZUM VERSCHLIESSEN VOM UMVERPACKUNGEN**
DEVICE FOR SECURING WRAP-AROUND PACKAGING STRIPS
DISPOSITIF POUR FERMER DES EMBALLAGES

(30) Priorität: 30.09.1993 DE 4333317
(43) Veröffentlichungstag der Anmeldung: 10.07.1996
(73) Patentinhaber: Schulte, Herbert, D-57489 Drolshagen (DE)
(72) Erfinder: Schulte, Herbert, D-57489 Drolshagen (DE)
(74) Vertreter: Patentanwälte Dipl.-Ing. Conrad Köchling Dipl.-Ing. Conrad-Joachim Köchling
(86) Internationale Anmeldenummer: DE9401020
(87) Internationale Veröffentlichungsnummer: WO9509116

(56) Entgegenhaltungen:
- WO-A-86/01180
- WO-A-92/06606
- FR-A- 2 518 376
- GB-A- 2 077 341
- US-A- 4 958 414

## Beschreibung

Die Erfindung betrifft eine Vorrichtung nach dem Oberbegriff des Anspruchs 1.

Eine derartige Ausbildung ist aus der US-A-4 958 414 bekannt.

Aus der DE 91 08 921 U1 ist ferner eine ähnliche Vorrichtung bekannt, wobei die dort gezeigten Verschlußmechanismen sich in der Praxis als nicht besonders brauchbar herausgestellt haben, da sowohl die Handhabung der Verschlußeinrichtung aufwendig, als auch deren Ausbildung und Anordnung kompliziert und wenig dauerhaft ist.

Ausgehend von dem eingangs bezeichneten Stand der Technik liegt der Erfindung die Aufgabe zugrunde, eine Vorrichtung gattungsgemäßer Art zu schaffen, die bei einfachem konstruktiven Aufbau eine leichte Handhabung ermöglicht und die zudem eine hohe Sicherheit gegen unbeabsichtigtes Öffnen bietet.

Zur Lösung dieser Aufgabe wird vorgeschlagen, daß der biegbare Hebel mindestens einen quer abragenden Zapfen aufweist und daß die um eine zum Zapfen parallele Achse drehbare Handhabe eine an dem Zapfen sich abstützende Führungskurve aufweist, die in der Offenstellung den Zapfen und und damit den Hebel in einer Außereingriffslage vom Einschubpfad weg hält, in einer Eingriffslage den Zapfen freigibt, so daß der Hebel mit seiner Sperrklinke in die Sperrverzahnung des ersten Elementes eingreift, und in einer Schließlage den Zapfen in der Eingriffslage verriegelt.

Bevorzugt ist dabei vorgesehen, daß der Hebel sich etwa parallel zum Einschubpfad erstreckt und sein freies Ende zu dem Ende des Einschubpfades weist, welches dem Einschubbeginn abgewandt ist.

Das Gehäuse samt biegbarem Hebel ist in einfacher Weise aus Kunststoff zu fertigen, wobei die Handhabe ebenfalls aus Kunststoff gefertigt sein kann und beidseits Zapfen aufweist, die in entsprechender Ausnehmung des Gehäuses einsetzbar sind und die Drehachse der Handhabe bilden. Die Ausbildung des ersten und zweiten Elementes sind äußerst einfach, wobei das zweite Element ein einfach ausgebildetes Bauteil ist, welches lediglich aus zwei Teilen besteht, nämlich aus einem Gehäuseteil mit Einschubpfad und angeformtem Hebel und aus der schwenk- oder drehbar an dem Gehäuseteil gehalterten Handhabe. Das Gehäuseteil kann in geeigneter Weise an dem anderen Zurrband oder an der Umverpackung selbst, die aus Band- oder Folienmaterial besteht, befestigt sein. Die Handhabung ist äußerst einfach. Zum Verzurren einer Umverpackung wird das bandförmige Teil mit Sperrverzahnung in den Einschubpfad des Verschlußteiles eingeschoben, wobei sich die Handhabe und damit auch der Hebel in der Einschubposition befindet, in welcher der Hebel unter materialeigener Vorspannung in den Einschubpfad hineinragt. Beim Durchlauf der Sperrverzahnung wird der Hebel dabei jeweils entsprechend der Zahnfolge angehoben bzw. abgesenkt, was aufgrund der Elastizität des Hebels möglich ist.

Nach Erreichen der Sollposition kann der Hebel durch Drehen der Handhabe verriegelt werden, so daß seine elastische Schwenkbewegung unterbunden ist. Soll die entsprechende Umverpackung geöffnet werden, so wird die Handhabe in der Öffnungsstellung verschwenkt, bei der der Hebel in eine Außereingriffslage entgegen der ihm eigenen Elastizität verschwenkt ist. In dieser Position kann das mit Sperrverzahnung versehene bandförmige Teil aus dem Verschlußteil herausgezogen werden und somit die Verpackung geöffnet werden.

Das Gehäuse samt biegbarem Hebel ist in einfacher Weise aus Kunststoff zu fertigen, wobei die Handhabe ebenfalls aus Kunststoff gefertigt sein kann und beidseits Zapfen aufweist, die in entsprechende Ausnehmungen des Gehäuses einsetzbar sind und die Drehachse der Handhabe bilden.

Bevorzugt ist ferner vorgesehen, daß die Führungskurve eine in der Offenstellung der Handhabe auf den Zapfen einwirkende Exzenterfläche, im Anschluß daran eine kreisbogenfläche aufweist, an der in Eingriffslage und in Schließlage der Zapfen anliegt und in Schließlage eine Verschlußmulde am Ende der Führungskurve aufweist, in die der Zapfen in Schließlage eingreift.

Auf diese Weise ist zwar eine einwandfreie Führung des Hebels bei der Betätigung der Handhabe erreicht, wobei durch diese Ausbildung es zusätzlich möglich ist, die Handhabe mit den angeformten Zapfen in Nuten einzusetzen, die in Wandungsteilen des Gehäuses angeordnet sind, wobei die Nut zum Hebel hin offen und auf der dem Hebel abgewandten Seite hin geschlossen ist. Durch den Hebel bzw. den daran befindlichen mit der Führungskurve in Eingriff befindlichen Zapfen wird die Handhabe in der Sollage gehalten, ohne daß es hierzu besonderer Befestigungsmittel bedürfte.

Bevorzugt ist ferner vorgesehen, daß die Handhabe einen angeformten Betätigungshebel aufweist, der in Schließlage bündig in einer zum Einschubpfad parallelen Gehäusefläche liegt, in Eingriffslage rechtwinklig davon abragt und in Außereingriffslage einen stumpfen Winkel mit der Position gemäß Schließlage einschließt.

Diese Ausbildung ist der Handhabung förderlich, wobei zudem durch die entsprechende Stellung der Handhabe für den Benutzer deutlich wird, ob die Vorrichtung sich in der Verriegelungsposition befindet.

Ein Ausführungsbeispiel der Erfindung ist in der Zeichnung schematisch dargestellt und im folgenden näher beschrieben.
Es zeigt:

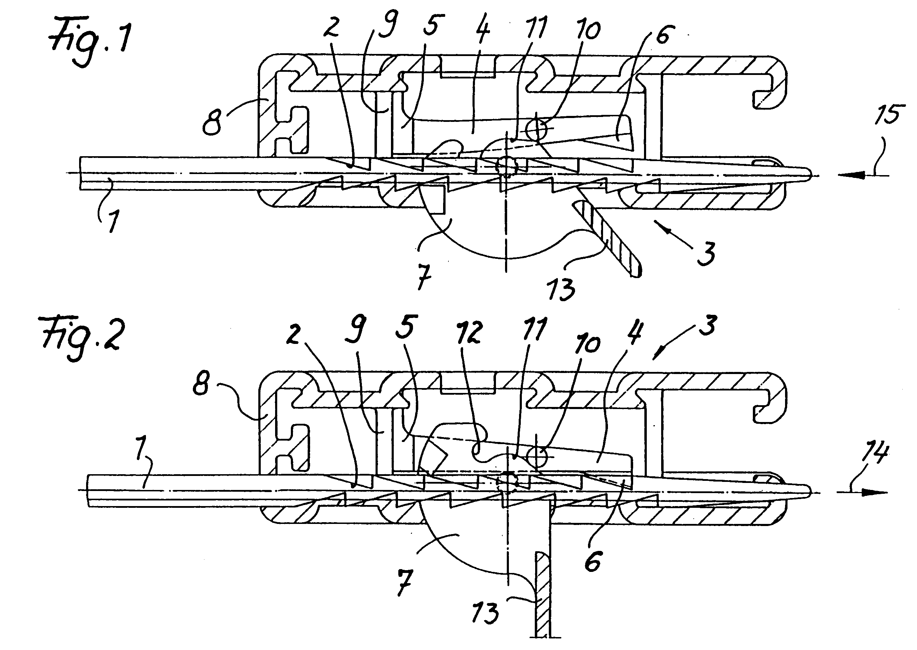

- Fig. 1 bis 3: Eine erfindungsgemäße Vorrichtung in Seitenansicht im Schnitt gesehen in der Öffnungsstellung, der Einschubposition und der Verriegelungsstellung.

Das in der Zeichnung dargestellte Element ist Bestandteil einer Vorrichtung zum Verschließen von Umverpackungen wie Bänder, Folien oder dergleichen bahnen- oder bandförmigen flexiblen Elementen, die zur Umhüllung von Paketen oder Stapel aus Einzelwaren, wie Steinen oder dergleichen quaderförmigen Produkten vorzugsweise besteht. Das bahnen- oder bandförmige flexible Element weist eine quer zur Umhüllungsrichtung verlaufende Stoßstelle auf, die durch die dargestellte Verschlußvorrichtung überbrückbar ist. Die Verschlußvorrichtung besteht aus miteinander lösbar verbundenen Zurrbändern mit rastenden Anzugs- und Spannmitteln sowie Handhabe, deren eines Element am freien Ende eines Zurrbandes und dessen anderes Element am freien Ende eine mit diesem zusammenwirkenden weiteren Zurrbandes befestigt oder durch dieses gebildet ist.

Erfindungsgemäß ist das erste Element 1 durch ein bandförmiges Teil (Spannband) mit Sperrverzahnung 2 gebildet. Das zweite Element 3 ist durch ein Verschlußteil gebildet, welches einen Einschubpfad für das erste Element 1 und eine in den Einschubpfad als Sperrklinge hineinragenden elastischen Hebel 4 aufweist, dessen eines Ende (bei 5) am Verschlußteil gehaltert insbesondere mit diesem einstückig ausgebildet ist und dessen freies Ende die Sperrklinke 6 trägt. Der Hebel 4 erstreckt sich in etwa parallel zum Einschubpfad und sein freies Ende (welches mit Sperrklinke 6 versehen ist) weist zu dem Ende des Einschubpfandes, des dem Einschubbeginn abgewandt ist, also in den Zeichnungsfiguren nach rechts.

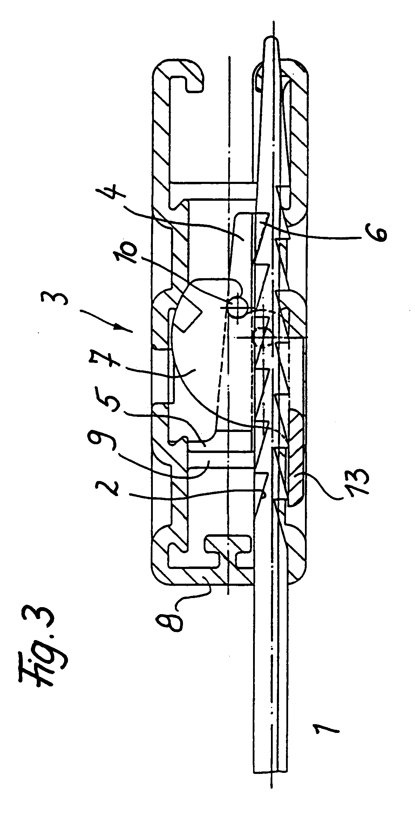

Am Verschlußteil ist eine schwenkbare Handhabe 7 gehaltert, mittels derer der Hebel 4 in einer Außereingriffslage (Figur 1) zum ersten Element 1 biegbar ist und mittels derer der Hebel 4 in der Eingriffslage zum ersten Element unbiegbar verriegelbar ist, wie in Figur 3 gezeigt.

Das Verschlußteil weist ein Gehäuseteil 8 auf, welches vom Einschubpfad durchsetzt ist. Dabei ist an einer Gehäusewand 9 der biegbare Hebel 4 angeformt. Der biegbare Hebel 4 weist mindestens einen quer abragenden Zapfen 10 auf, während die um eine zum Zapfen 10 parallele Achse drehbare Handhabe 7 eine an dem Zapfen 4 sich abstützende Führungkurve 11 aufweist, die in der Offenstellung (Figur 1) den Zapfen 10 und damit den Hebel 4 in eine Außereingriffslage vom Einschubpfad wegdrückt, in eine Eingriffslage gemäß Figur 2 den Zapfen 10 freigibt oder annähernd freigibt, so daß der Hebel 4 mit seiner Sperrklinke 6 in die Sperrverzahlung 2 des ersten Elementes 1 eingreift (vergleiche Figur 2) und in einer Schließlage (vergleiche Figur 3) den Zapfen in der Eingriffslage verriegelt. Die Führungskurve 11 weist eine in der Offenstellung gemäß Figur 1 der Handhabe 7 auf den Zapfen 10 einwirkende Exenterfläche und im Anschluß daran eine Kreisbogenfläche auf, an der in der Eingrifflage (Figur 2) und in der Schließlage (Figur 3) der Zapfen 10 anliegt, wobei in der Schließlage eine Verschlußmulde 12 am Ende der Führungskurve 11 vorgesehen ist, die den Zapfen 10 in Schließlage übergreift und verriegelt.

Die Handhabe 7 weist zudem einen angeformten Betätigungshebel 13 auf, der in der Schließlage gemäß Figur 3 bündig in einer zum Einschubpfad parallelen Gehäusefläche liegt, in der Eingriffslage gemäß Figur 2 rechtwinklig vom Gehäuse abragt und in der Außereingriffslage gemäß Figur 1 einen stumpfen Winkel mit der Position gemäß Schließlage (Figur 3) einschließt.

Zum Verschließen einer Umverpackung wird das Element 1 gemäß Darstellung Figur 2 in den Einschubpfad des Gehäuses 8 eingeschoben, wobei der Riegel elastisch in die Sperrverzahung 2 eingreift. Das Element 1 kann also in Richtung des Pfeiles 14 durch des Verschlußteil hindurchgezogen werden. Sobald die Sollposition erreicht ist, wird die Handhabe 7 durch manuellen Angriff am Betätigungshebel 13 aus der Position gemäß Figur 2 in die Position gemäß Figur 3 verschwenkt, so daß der Zapfen 10 des Hebels 4 von der Eingriffmulde der Handhabe 7 übergriffen und damit blockiert ist. Das Element 1 ist damit unbeweglich im Verschlußteil gehalten. Soll der Verschluß geöffnet werden, so wird die Handhabe mittels Betätigung des Betätigungshebels 13 aus der Position gemäß Figur 3 in die Position gemäß Figur 1 verschwenkt, in welcher der Riegel 4 durch das Zusammenwirken der Eingriffskurve 11 mit dem Zapfen 10 in die Außerein-griffsposition gedrängt ist. Das Element 1 kann dann in Richtung des Pfeiles 15 aus dem Verschlußteil herausgezogen werden.

Die Umverpackung ist dann von dem entsprechenden Warenstapel abzunehmen und kann wiederverwendet werden.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Vorrichtung zum Verschließen von Umverpackungen, wie Bändern, Folien oder dergleichen bahnen- oder bandförmigen flexiblen Elementen, für Pakete oder Stapel aus Einzelwaren, wie Steinen oder dergleichen quaderförmigen Produkten, wobei das bahnen- oder bandförmige flexible Element eine quer zur Umhüllungsrichtung verlaufende Stoßstelle aufweist, die durch die Verschlußvorrichtung überbrückbar ist, wobei die Verschlußvorrichtung aus miteinander lösbar verbundenen Zurrbändern mit rastenden Anzugs- und Spannmitteln sowie Handhabe besteht, deren eines Element am freien Ende eines Zurrbandes und dessen anderes Element am freien Ende eines mit diesem zusammenwirkenden weiteren Zurrbandes befestigt ist oder durch dieses gebildet ist, wobei das erste Element (1) durch ein bandförmiges Teil mit Sperrverzahnung (2) gebildet ist und das zweite Element (3) durch ein Verschlußteil gebildet ist, welches einen Einschubpfad für das erste Element (1) und einen in den Einschubpfad als Sperrklinke hineinragenden elastischen Hebel (4) aufweist, dessen eines Ende am Verschlußteil gehaltert oder mit diesem einstückig ausgebildet ist und dessen freies Ende die Sperrklinke (6) aufweist, wobei ferner am Verschlußteil eine schwenkbare Handhabe (7) gehaltert ist, mittels derer der Hebel (4) in eine Außereingriffslage zum ersten Element (1) biegbar ist und mittels derer der Hebel (4) in die Eingriffslage zum ersten Element (1) unbiegbar verriegelbar ist, wobei das Verschlußteil ein Gehäuse (8) aufweist, welches vom Einschubpfad durchsetzt ist, und wobei an einer Gehäusewand (9) der biegbare Hebel (4) angeformt ist, **dadurch gekennzeichnet, daß** der biegbare Hebel (4) mindestens einen quer abragenden Zapfen (10) aufweist und daß die um eine zum Zapfen (10) parallele Achse drehbare Handhabe (7) eine an dem Zapfen (10) sich abstützende Führungskurve (11) aufweist, die in der Offenstellung den Zapfen (10) und damit den Hebel (4) in einer Außereingrifflage vom Einschubpfad weg hält, in einer Eingriffslage den Zapfen (10) freigibt, so daß der Hebel (4) mit seiner Sperrklinke (6) in die Sperrverzahnung (2) des ersten Elementes (1) eingreift, und in einer Schließlage den Zapfen (10) in der Eingriffslage verriegelt.

2. Vorrichtung nach Anspruch 1, **dadurch gekennzeichnet, daß** der Hebel (4) sich etwa parallel zum Einschubpfad erstreckt und sein freies Ende zu dem Ende des Einschubpfades weist, welches dem Einschubbeginn abgewandt ist.

3. Vorrichtung nach Anspruch 1 oder 2, **dadurch gekennzeichnet, daß** die Führungskurve (11) eine in der Offenstellung der Handhabe (7) auf den Zapfen (10) einwirkende Exzenterfläche, im Anschluß daran eine Kreisbogenfläche aufweist, an der in Eingriffslage und in Schließlage der Zapfen (10) anliegt und in Schließlage eine Verschlußmulde (12) am Ende der Führungskurve (10) aufweist, in die der Zapfen (10) in Schließlage eingreift.

4. Vorrichtung nach einem der Ansprüche 1 bis 3, **dadurch gekennzeichnet, daß** die Handhabe (7) einen angeformten Betätigungshebel (13) aufweist, der in Schließlage bündig in einer zum Einschubpfad parallelen Gehäusefläche liegt, in Eingriffslage rechtwinklig davon abragt und in Außereingriffslage einen stumpfen Winkel mit der Position gemäß Schließlage einschließt.

## Claims

1. Device for sealing wrap-around packagings, such as strips, sheets or similar web-type or strip-type flexible elements, for packets or stacks of individual products, such as bricks or similar block-type products, the web-type or strip-type flexible element having a joint abutment which extends transversely to the wrapping direction and which can be bridged by the closing device, the closing device comprising lashing strips detachably joined together and having latching tightening and clamping means and also a handle, one element of which is attached to the free end of one lashing strip and another element of which is attached to the free end of a further lashing strip which interacts with the latter or is formed by the latter, the first element (1) being formed by a strip-type part having locking teeth (2) and the second element (3) being formed by a closure part which has an insertion path for the first element (1) and an elastic lever (4) which extends into the insertion path as a detent pawl, one end of which is mounted on the closure part or is integrally formed with the latter and whose free end has the detent pawl (6), there furthermore being mounted on the closure part a pivotable handle (7) by means of which the lever (4) can be bent into an out-of-engagement position with respect to the first element (1) and by means of which the lever (4) can be unbendably locked in the engagement position with respect to the first element (1), the closure part having a housing (8) which is penetrated by the insertion path and the bendable lever (4) being formed on a housing wall (9), characterized in that the bendable lever (4) has at least one transversally projecting stud (10) and in that the handle (7) which can be rotated around an axis parallel to the stud (10) has a guide cam (11) which bears on the stud (10) and which, in the open position, holds the stud (10) and consequently the lever (4) away from the insertion path in an out-of-engagement position and releases the stud (10) into an engagement position, with the result that the detent pawl (6) of the lever (4) engages in the locking teeth (2) of the first element (1) and locks the stud (10) in the engagement position in a closed position.

2. Device according to Claim 1, characterized in that the lever (4) extends approximately parallel to the insertion path and its free end points to that end of the insertion path which is remote from the start of insertion.

3. Device according to Claim 1 or 2, characterized in that the guide cam (11) has an eccentric surface which acts on the stud (10) in the open position of the handle (7) and has, adjacent thereto, a circular-arc surface on which the stud (10) rests in the engagement position and in the closed position, and has, in the closed position, a closure recess (12) at the end of the guide cam (10), in which the stud (10) engages in the closed position.

4. Device according to one of Claims 1 to 3, characterized in that the handle (7) has a formed-on actuating lever (13) which in the closed position lies flush in a housing surface parallel to the insertion path, in the engagement position projects therefrom at right angles and in the out-of-engagement position encloses an obtuse angle with the position according to the closed position.

## Revendications

1. Dispositif de fermeture d'emballages ou d'enveloppes d'enveloppement, tels que des rubans, des feuilles ou des éléments flexibles en forme de bandes ou de rubans analogues, pour des paquets ou des piles de marchandises individualisées, telles que des briques ou des produits parallélépipédiques analogues, l'élément flexible en forme de bande ou de ruban, présentant un point de jointure courant transversalement par rapport à la direction de l'enveloppement et pouvant être ponté ou chevauché par le dispositif de fermeture, le dispositif de fermeture étant constitué de rubans d'amarrage reliés ensemble de façon désolidarisable et comportant des moyens de serrage et de mises sous tension, travaillant avec un encliquetage, ainsi qu'une poignée, dont un élément est fixé à l'extrémité libre d'un ruban d'amarrage et dont l'autre élément est fixé à l'extrémité libre d'un autre ruban d'amarrage coopérant avec celui-ci ou bien est constitué par celui-ci, le premier élément (1) étant constitué par une partie en forme de ruban présentant une denture de verrouillage (2) et le deuxième élément (3) étant constitué par une partie de fermeture qui présente un chemin d'introduction destiné au premier élément (1) et un levier élastique (4) pénétrant à titre de cliquet de verrouillage dans le chemin d'introduction et dont une extrémité est maintenue sur la partie de fermeture ou bien est réalisée d'une seule pièce avec celle-ci et dont l'extrémité libre présente le cliquet de verrouillage (6), une poignée (7) pivotante étant en outre fixée sur la partie de fermeture, poignée pivotante au moyen de laquelle le levier (4) peut être replié dans une position de sortie d'engagement vis-à-vis du premier élément (1) et poignée au moyen de laquelle le levier (4) peut être verrouillé sans possibilité de pliage dans la position d'engagement vis-à-vis du premier élément, la partie de fermeture présentant un carter (8) qui est traversé par le chemin d'introduction et le levier (4) repliable étant formé d'un seul tenant sur une paroi de carter (9), caractérisé en ce que le levier repliable (4) présente au moins un tourillon (10) faisant saillie transversalement et en ce que la poignée (7) pouvant tourner autour d'un axe parallèle au tourillon (10) présente une came de guidage (11) prenant appui sur le tourillon (10) et qui écarte le tourillon (10) et ainsi le levier (4) dans une position hors de prise vis-à-vis du chemin d'introduction, dans une position d'ouverture, qui libérant le tourillon (10) lorsqu'on se trouve dans une position d'engagement de manière que le levier (4) s'engage par son cliquet de verrouillage (6) dans la denture de verrouillage (2) du premier élément (1) et qui verrouille le tourillon (10) dans la position d'engagement lorsqu'on se trouve dans une position de fermeture.

2. Dispositif selon la revendication 1, caractérisé en ce que le levier (4) s'étend à peu près parallèlement au chemin d'introduction et son extrémité libre est dirigée vers la fin du chemin d'introduction, à l'opposé du début de l'introduction.

3. Dispositif selon la revendication 1 ou 2, caractérisé en ce que la came de guidage (11) présente une surface excentrique agissant sur le tourillon (10) lorsque la poignée se trouve en position d'ouverture et présente suite à la surface excentrique une surface en arc de cercle sur laquelle appuie le tourillon (10) lorsqu'il se trouve en position d'engagement et en position de fermeture et présente en position de fermeture une auge de fermeture (12) se trouvant à l'extrémité de la came de guidage (11) dans laquelle le tourillon (10) s'engage dans la position de fermeture.

4. Dispositif selon l'une des revendications 1 à 3, caractérisé en ce que la poignée (7) présente un levier d'actionnement (13) formé d'un seul tenant qui dans la position de fermeture est affleurante avec une surface de carter parallèle au chemin d'introduction et qui dans la position d'engagement en fait saillie à angle droit et dans la position hors de contact fait un angle obtus avec la position prise lorsque l'on se trouve en situation de fermeture.
